(19) Europäisches Patentamt
European Patent Office
Office européen des brevets

(11) **EP 2 178 202 A1**

(12) **EUROPEAN PATENT APPLICATION**
published in accordance with Art. 153(4) EPC

(43) Date of publication:
**21.04.2010 Bulletin 2010/16**

(51) Int Cl.:
***H02P 29/00*** (2006.01)

(21) Application number: **08778027.6**

(22) Date of filing: **10.07.2008**

(86) International application number:
**PCT/JP2008/062467**

(87) International publication number:
**WO 2009/019953 (12.02.2009 Gazette 2009/07)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **03.08.2007 JP 2007202758**

(71) Applicant: **Kabushiki Kaisha Yaskawa Denki Kitakyushu-shi, Fukuoka 806-0004 (JP)**

(72) Inventors:
• **KOMIYA, Takehiko,**
**c/o Kabushiki Kaisha Yaskawa Denki**
**Kitakyushu-Shi, 806-0004 Fukuoka (JP)**

• **TAKAO, Kazuhide,**
**c/o Kabushiki Kaisha Yaskawa Denki**
**Kitakyushu-Shi, 806-0004 Fukuoka (JP)**
• **INOKI, Keisei,**
**c/o Kabushiki Kaisha Yaskawa Denki**
**Kitakyushu-Shi, 806-0004 Fukuoka (JP)**
• **MIHARA, Shuichi,**
**c/o Kabushiki Kaisha Yaskawa Denki**
**Kitakyushu-Shi, 806-0004 Fukuoka (JP)**

(74) Representative: **Gendron, Vincent Christian et al**
**SA FEDIT-LORIOT ET AUTRES**
**38, avenue Hoche**
**75008 Paris (FR)**

(54) **MOTOR CONTROL DEVICE AND GAIN ADJUSTMENT METHOD THEREOF**

(57)     A motor controller and a gain adjusting method for the motor controller capable of detecting an oscillation of a feedback loop and performing gain adjustment while updating a gain value of a control unit are provided.

The motor controller includes an electric motor (1), an operation-amount detector (2), a control unit (3), a machine (5), a disturbance signal generator (10) which generates a sweep sine wave, a compensation-driving-force detector (11), a vibration calculator (12), an oscillation detector (13), a vibration storage (14), a simulated open-loop gain calculator (15), a gain changer (30), and an automatic gain changer (31), and detects an oscillation by processing a response signal in time series on the basis of a first threshold regarding to a magnitude of vibration and a second threshold regarding a frequency.

FIG. 1

EP 2 178 202 A1

**Description**

Technical Field

The present invention relates to a motor controller included in a positioning apparatus for a semiconductor manufacturing apparatus, a machine tool, or an industrial robot. The present invention relates to a motor controller and a gain control method for the motor controller with which a gain margin can be simply evaluated by adding a sweep sine wave to a driving force as a disturbance signal and detecting an oscillation of a feedback loop of a control unit on the basis of a first threshold based on the magnitude of vibration and a second threshold based on a vibration frequency.

Background Art

In a limit-gain extracting method of a servo control apparatus according to a related art, to extract a limit gain of a servo control apparatus capable of automatically setting an optimum control gain, the servo control apparatus is provided with vibration detecting means and vibrating means which adds a simulated disturbance torque to a torque command. The simulated disturbance torque generates vibration of a certain level when a control gain is increased. In the limit-gain extracting method according to the related art, processes of applying vibration after making an adjustment, causing the vibration detection means to detect the vibration, and adding the simulated disturbance torque while increasing a control gain unless vibration of a certain level is detected are repeated, and a control gain at which vibration with a level that exceeds the certain level is detected is determined as the limit gain. A maximum gain is determined by the above-mentioned limit-gain extracting method in advance, and the control gain is set below the maximum gain (see, for example, Patent Document 1).

In a resonance frequency detector of an electric motor control unit according to another related art, to perform high-speed measurement of a resonance frequency by a simple operation and to detect the resonance frequency with an inexpensive operation device, the resonance frequency detector of the electric motor control unit includes an electric motor 203 which drives a machine, a detecting means 205 which detects an amount of operation of the machine, and a controller 202 which receives a control command and drives the electric motor 203. According to an electric-motor control system of the related art, a command generator 201 generates a sweep sine wave signal and inputs the sweep sine wave signal to the electric-motor control system. Frequency information of the sweep sine wave signal output by the command generator 201 and a signal from the detecting means 205 are input to the control system, and a frequency of the sweep sine wave signal at which the absolute value of the signal from the detecting means 205 is at a maximum is output as a resonance frequency (see, for example, Patent Document 2).

In addition, in an example of a publication regarding the stability theory and discrimination method for a digital servo system according to another related art, (1) discrimination based on a characteristic root and (2) stability discrimination based on an open-loop system are discussed, and a practical Nyquist criterion is described as a method for performing (2) stability discrimination based on an open-loop system. This method is used to discriminate between a stable state having a gain margin and a phase margin, a stability limit, and an unstable state using a Bode diagram of an open-loop system (open-loop transfer function) (see, for example, Non-Patent Document 1).

[Patent Document 1] Japanese Unexamined Patent Application Publication No. 2005-45937 (Figs. 2, 4, and 6)
[Patent Document 2] Japanese Unexamined Patent Application Publication No. 2003-134868 (Figs. 1 and 8)
[Non-Patent Document 1] "Zukai to jissen de manabu digitaru sabo no riron to jissen (Learning of theory and practice of digital servo systems through illustration and practice)" by Honda and Shirotani, published June 30, 1998 by The Nikkan Kogyo Shinbun, Ltd., pp. 42-46

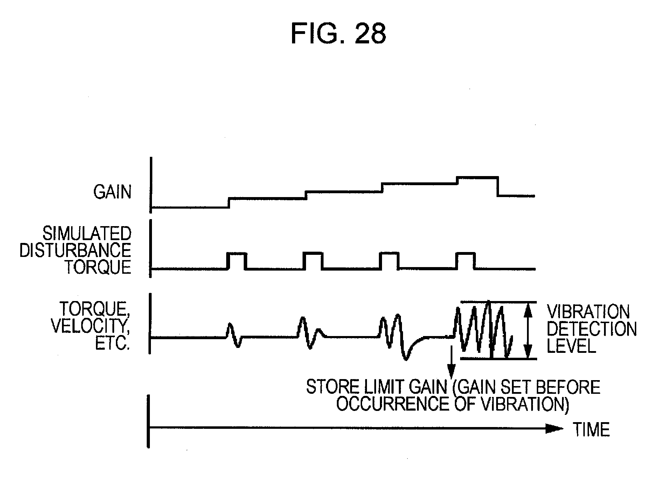

The limit-gain extracting method of the servo control apparatus according to Patent Document 1, which is a first related art, will now be described.
Fig. 27 is a control block diagram of the servo control apparatus according to Patent Document 1, which is the first related art. Fig. 28 is a diagram illustrating vibration generated when the gain is increased, reduction in gain for when the vibration is generated, and limit-gain extraction timing according to Patent Document 1, which is the first related art. Fig. 29 is a flowchart of a limit-gain extracting process according to Patent Document 1, which is the first related art.
As shown in Figs. 27 and 28, the simulated disturbance torque is applied as a step signal so that the simulated disturbance torque overpowers the mechanical load, such as friction, and disturbs the stable state. As a result, vibration is induced. The procedure for detecting the limit gain will now be described with reference to the flowchart shown in Fig. 29. First, a gain of a control system, such as a position loop and a velocity loop, is set to a low value. Then, a normal operation or an operation of a machine is performed and vibration detecting means is caused to detect a vibration level specific to the machine in operation (S1).
Next, the gain of the control system such as the position loop and the velocity loop is set to a low value, and a simulated disturbance torque is added to a torque command τref in the control block diagram shown in Fig. 28 as a step signal (S2). Then, it is determined whether or not the response in position error, velocity, etc., exceeds a certain vibration level (S3). If the response does not exceed the vibration level in step S3 (if No), it is determined that the added simulated disturbance torque could not overpower the mechanical load and the simulated disturbance torque is increased (S4). Accordingly, the simulated disturbance torque is increased such that the response increases to a predetermined level. If the response does not increase even when the simulated disturbance torque is increased to a certain level, the detection level of the response is reduced. In this way, the magnitude of the simulated disturbance torque and the detection level of the response to the simulated disturbance torque are adjusted.

If the response exceeds the vibration level in step S3 (if Yes), the magnitude of the simulated disturbance torque is determined and the gain is increased stepwise at the timing shown in Fig. 28 (S5). After the control gain is increased by the process performed in step S5, it is determined whether or not the gain is equal to a set maximum gain (S6). If the result of the determination is No in step S6, the simulated disturbance torque is added to the torque command (S7) and vibration is observed by the vibration detecting means 1 (S8). The vibration detecting means 1 compares, for example, an amplitude of the torque or velocity with a vibration detection level, and detects that vibration has occurred if the amplitude exceeds the vibration level.

If vibration of more than a certain level is detected after the addition of the simulated disturbance torque, the addition of the simulated disturbance torque at the timing shown in Fig. 28 is stopped and the control gain is reduced to a level at which vibration does not occur (S9). Alternatively, to reliably stop the vibration, the torque command is reduced or the position error is momentarily set to zero. Then, the gain set previous to the gain at which the vibration has occurred is stored in the storage means of a microcomputer or the like as a limit gain. The thus-stored gain is the limit gain to be detected.

If it is determined in step S6 that the gain is equal to the set maximum gain (if Yes), the simulated disturbance torque is increased (S10) and processes of S11 to S14 are performed. Then, if the response exceeds the vibration level (S14), the limit gain is updated (S15). Thus, a process of ensuring the gain margin is performed.

As the simulated disturbance torque increases, the impact on the machine also increases and the control gain at which the vibration does not occur decreases.

The simulated disturbance torque is slightly increased (S10), and the limit gain is extracted in S11 to S14 by processes similar to the above-described processes. When the limit gain is extracted after slightly increasing the simulated disturbance torque, the control gain decreases and the amount of decrease in the control gain serves as the margin of the control gain in the actual operation. Therefore, the operation can be performed with the margin. The margin can be changed in accordance with the application or other factors.

Thus, according to the limit-gain extracting method of the servo control apparatus of the related art, the limit gain of the servo control apparatus capable of automatically setting an optimum control gain is extracted.

The resonance frequency detector of the electric motor control unit according to Patent Document 2, which is a second related art, will now be described.

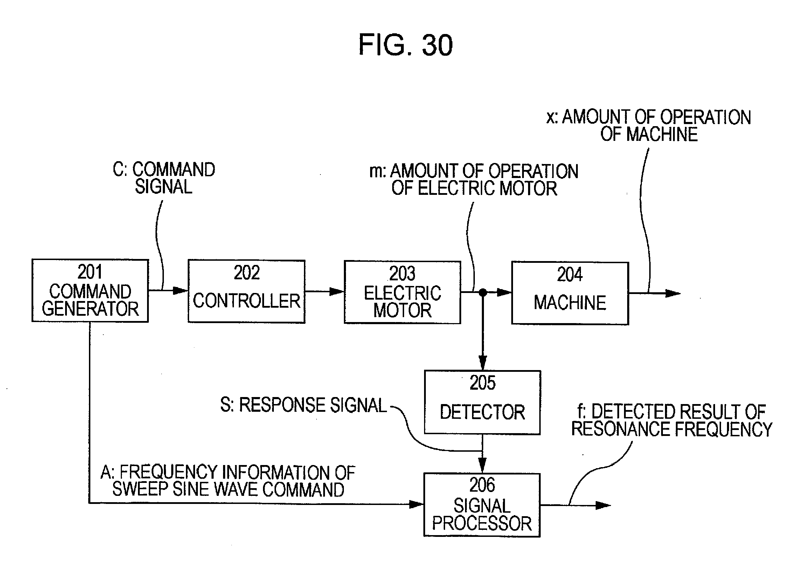

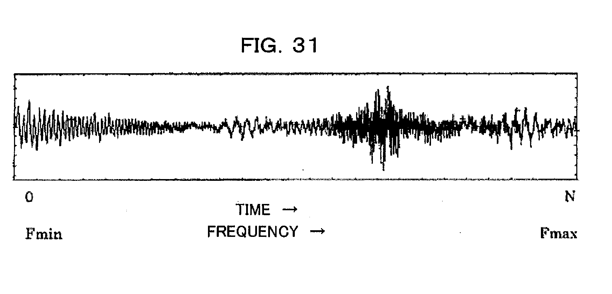

Fig. 30 is a block diagram illustrating the structure of the resonance frequency detector according to Patent Document 2, which is the second related art. Fig. 31 illustrates a time response wave according to Patent Document 2, which is the second related art.

The command generator 201 outputs a sweep sine wave command whose frequency changes from a minimum frequency Fmin to a maximum frequency Fmax as a command signal C. At the same time, the command generator 201 also outputs information A regarding the frequency of the command signal C that changes continuously with time. The controller 202 drives the electric motor 203 in accordance with the command signal C received from the command generator 201 so that a machine 204 connected to the electric motor 203 operates. The detecting means 205 connected to the electric motor 203 detects an amount of operation m of the electric motor as shown in Fig. 30, and transmits the amount of operation m of the electric motor to a signal processor 206 as a response signal S. In this figure, since the electric motor 203 is connected to the machine 204, the resonance characteristics of the machine 204 can be detected by detecting the amount of operation m of the electric motor. Since the machine 204 has resonance characteristics that show a large reaction even when the disturbance is small depending on the frequency, the amplitude of the response signal S becomes maximum at the resonance frequency. The signal processor 206 receives the frequency information A of the sweep sine wave command and the response signal S, and starts a calculation for detecting the resonance frequency at a detection lower-limit frequency Flim which exceeds a minimum frequency Fmin. A frequency of the sweep sine wave which is equal to or higher than the detection lower-limit frequency Flim and at which the absolute value of the response signal S becomes maximum as shown in Fig. 31 is determined as the resonance frequency, and the thus-obtained resonance frequency detection result f is output.

Thus, the resonance frequency detector of the electric motor control unit according to the related art detects the resonance frequency by driving the electric motor with a sweep sine wave.

The stability theory and discrimination method for a digital servo system according to Non-Patent Document 1, which is a third related art, will now be described.

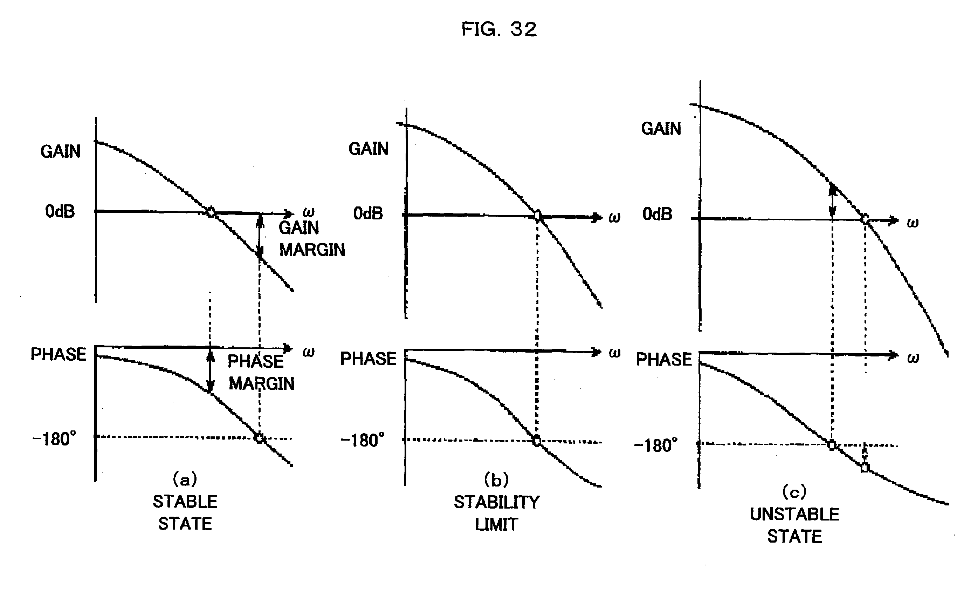

Fig. 32 illustrates an example of dynamic characteristics estimation using a Bode diagram of an open-loop system (open-loop transfer function) according to Non-Patent Document 1, which is the third related art. The Bode diagrams shown in the figure are used to theoretically determine the stability of a control system, and show (a) stable state, (b) stability limit, and (c) unstable state from the left.

In (a) stable state, when the gain is 0 dB, a change in phase from that at 0 Hz is less than -180°. This is called a phase margin. In addition, when the change in phase is - 180°, the gain is equal to or lower than 0 dB. This gain is called a gain margin.

At (b) stability limit, when the gain is 0 dB, the change in phase is -180°. In other words, when the change in phase is -180°, the gain is 0 dB. The gain margin and phase margin are both at the limit.

In (c) unstable state, when the gain is 0 dB, the change in phase is equal to or higher than -180°. In addition, when the change in phase is -180°, the gain is equal to or higher than 0 dB. No gain margin or phase margin is provided, and the state is unstable.

Disclosure of Invention

Problems to be Solved by the Invention

In the limit-gain extracting method of the servo control apparatus according to Patent Document 1, which is the first related art, there is a problem that the occurrence of vibration is determined only on the basis of the magnitude (amplitude) and the frequency cannot be taken into consideration. In addition, since the simulated disturbance torque is applied as a step signal, in the case where the oscillation induced by the shape of the step signal does not always match the actual operation, the gain value optimum for the actual operation cannot be obtained. Therefore, there is a risk that oscillation will occur.

The resonance frequency detector of the electric motor control unit according to Patent Document 2, which is the second related art, provides the detection result of the resonance frequency. Therefore, the gain value of the controller 202 cannot be obtained. If the gain value is too high, there is a risk that oscillation will occur during the application, and the there is a problem that an operator must make the decision.

According to the stability theory and discrimination method for a digital servo system according to Non-Patent Document 1, which is the third related art, it is necessary to calculate the Bode diagram of the open-loop system (open-loop transfer function) through frequency analysis and numerical operation using the result of the frequency analysis. It is cumbersome to observe the Bode diagram of the open-loop system (open-loop transfer function) while changing the gain value. In addition, although rigid body systems have Bode diagrams similar to those shown in Fig. 31, actual machines have characteristics of multi-inertia systems. Therefore, there is a problem that the shapes of the Bode diagrams of the actual machines differ from those shown in Fig. 31.

The present invention has been made in view of the above-described problems, and an object of the present invention is to provide a motor controller and a gain adjusting method with which it is not necessary to observe the Bode diagram of the open-loop system (open-loop transfer function) while changing the gain value even for a machine having the characteristics of multi-inertia systems, and with which gain adjustment can be performed while updating a gain value of a control unit by detecting an oscillation of a feedback loop under conditions that match the conditions in the actual operation.

Means for Solving the Problems

To solve the above-described problems, the present invention provides the following structure.

According to the invention described in claim 1, a motor controller includes a control unit which receives a detection signal from an operation-amount detector and generates a driving force for driving an electric motor in response to a command signal, the operation-amount detector detecting an amount of operation of the electric motor or a machine, a disturbance signal generator which adds a disturbance signal to the driving force generated by the control unit, a compensation-driving-force detector which detects the driving force generated by the control unit, and a vibration calculator which calculates a magnitude of vibration and a vibration frequency, the magnitude of vibration being calculated on the basis of an absolute value or a square value of a signal detected by the compensation-driving-force detector or the operation-amount detector, and a feedback loop is provided for controlling the electric motor with the control unit such that the amount of operation matches the command signal. The motor controller is characterized by including an oscillation detector which detects an oscillation of the feedback loop by evaluating the signal detected by the compensation-driving-force detector or the operation-amount detector on the basis of at least one first predetermined threshold based on a magnitude of the signal detected by the compensation-driving-force detector or the operation-amount detector and at least one second predetermined threshold based on the vibration frequency.

In addition, according to the invention described in claim 2, the motor controller according to claim 1 further includes a simulated open-loop gain calculator which performs simulated calculation of a gain curve of an open-loop transfer function using the signal from the compensation-driving-force detector.

In addition, according to the invention described in claim 3, in the motor controller according to claim 2, the disturbance signal added by the disturbance signal generator to the driving force generated by the control unit is a sweep sine wave.

In addition, according to the invention described in claim 4, in the motor controller according to claim 3, the vibration calculator calculates the vibration frequency at a time point at which the magnitude of vibration is large on the basis of the signal detected by the compensation-driving-force detector or the operation-amount detector.

In addition, according to the invention described in claim 5, in the motor controller according to claim 1, the control unit includes a gain changer capable of changing responsiveness of the control unit.

In addition, according to the invention described in claim 6, the motor controller according to claim 5 further includes a vibration storage which stores the vibration frequency and the magnitude of vibration detected by the vibration calculator.

In addition, according to the invention described in claim 7, in the motor controller according to claim 6, the vibration storage stores a value of the gain changer.

In addition, according to the invention described in claim 8, in the motor controller according to claim 7, the control unit includes an automatic gain changer which automatically changes the gain changer and which stops changing the gain changer and returns the value of the gain changer to a gain stored in the vibration storage in response to a signal from the oscillation detector.

In addition, according to the invention described in claim 9, in the motor controller according to claim 1, the disturbance signal generator adds a disturbance signal including a wide-range frequency component to the driving force generated by the control unit.

In addition, according to the invention described in claim 10, the motor controller according to claim 9 further includes an open-loop transfer function calculator which calculates an open-loop transfer function on the basis of the signal from the compensation-driving-force detector and a signal from the disturbance signal generator.

In addition, according to the invention described in claim 11, the motor controller according to claim 9 further includes a mechanical characteristic calculator which calculates characteristics of the electric motor and the machine driven by the electric motor on the basis of the signal from the operation-amount detector and a signal from the disturbance signal generator.

In addition, according to the invention described in claim 12, a gain adjusting method is for a motor controller including a control unit which receives a detection signal from an operation-amount detector and generates a driving force for driving an electric motor in response to a command signal, the operation-amount detector detecting an amount of operation of the electric motor or a machine. A feedback loop is provided for controlling the electric motor with the control unit such that the amount of operation matches the command signal. A sweep sine wave is generated as a disturbance signal. The electric motor is driven by adding the disturbance signal to the driving force generated by the control unit. The driving force generated by the control unit is detected. A magnitude of vibration is calculated on the basis of an absolute value or a square value of the driving force generated by the control unit or the signal from the operation-amount detector. A vibration frequency at a time point at which the magnitude of vibration is large is calculated on the basis of a frequency of the driving force or the signal from the operation-amount detector. The gain adjusting method is characterized by including the step of detecting an oscillation of the feedback loop by evaluating the driving force generated by the control unit or the signal from the operation-amount detector on the basis of at least one first predetermined threshold based on a magnitude of the driving force or the signal from the operation-amount detector and at least one second predetermined threshold based on the vibration frequency.

In addition, according to the invention described in claim 13, the gain adjusting method for the motor controller according to claim 12 further includes the step of performing simulated calculation of a gain curve of an open-loop transfer function using the driving force generated by the control unit.

In addition, according to the invention described in claim 14, the gain adjusting method for the motor controller according to claim 12 further includes the step of changing a gain of the control unit to change responsiveness of the control unit.

In addition, according to the invention described in claim 15, the gain adjusting method for the motor controller according to claim 14 further includes the step of storing the vibration frequency and the magnitude of vibration determined on the basis of the driving force generated by the control unit or the signal from the operation-amount detector.

In addition, according to the invention described in claim 16, the gain adjusting method for the motor controller according to claim 15 further includes the step of storing a value of the gain of the control unit.

In addition, according to the invention described in claim 17, the gain adjusting method for the motor controller according to claim 16 further includes the steps of automatically changing the gain of the control unit; and stopping the step of automatically changing the gain and returning the gain to the stored value when the oscillation is detected.

In addition, according to the invention described in claim 18, the gain adjusting method for the motor controller according to claim 12 further includes the steps of generating a signal including a wide-range frequency component instead of the sweep sine wave as the disturbance signal; and calculating an open-loop transfer function from the signal including the wide-range frequency component and the driving force generated by the control unit.

In addition, according to the invention described in claim 19, the gain adjusting method for the motor controller according to claim 12 further includes the steps of generating a signal including a wide-range frequency component instead of the sweep sine wave as the disturbance signal; and calculating characteristics of the electric motor and the machine from the signal including the wide-range frequency component and the signal detected by the operation-amount detector.

Advantages

According to the present invention, the oscillation is detected using the first threshold and the second threshold regarding the magnitude and frequency, respectively, of the response signal from the compensation-driving-force detector or the detector. According to the invention described in claim 3, claim 4, and claims 12 to 17, the second threshold can be used as a threshold regarding the time point instead of the frequency. Therefore, the oscillation limit of the oscillator can be simply evaluated.

In addition, according to the invention of claims 5 to 8 and claims 14 to 17, the gain value of the control unit can be changed and the oscillation limit of the control unit can be simply detected while adjusting the gain.

In addition, according to the invention described in claims 6 and 15, the vibration frequency and the magnitude of vibration can be stored.

In addition, according to the invention described in claims 7 and 16, the vibration frequency, the magnitude of vibration, and the gain value of the control unit can be stored.

In addition, when the vibration frequency and the magnitude of vibration are stored as in claims 6, 7, 15, and 16, the oscillation limit of the control unit can be detected by the comparison with the first threshold and the second threshold.

In addition, when the gain value is stored as in claims 7 and 16, the gain value can be returned to a value at which the oscillation does not occur after the detection of the oscillation limit of the control unit.

In addition, according to the invention described in claims 8 and 17, the gain of the control unit can be changed and the gain parameter can be automatically adjusted. Since the gain value can be returned to the value at which the oscillation does not occur if the oscillation is detected, the gain value of the control unit can be automatically adjusted.

In addition, according to the invention described in claims 2 and 13, simulated calculation of the characteristics of the gain curve of the open-loop transfer function can be performed. Therefore, the open-loop transfer function can be simply evaluated.

In addition, according to the invention described in claims 10 and 18, not only can the simple evaluation the open-loop transfer function be performed, but also the detailed evaluation of the open-loop transfer function can be performed. Therefore, the final gain margin and the phase margin of the control unit can be determined.

In addition, according to the invention described in claims 11 and 19, the characteristics of the motor and the machine can be calculated in advance. Therefore, the ranges in which the comparison with first threshold and the second threshold is performed can be recognized in advance. In addition, a filter can be applied by the control unit in advance.

Brief Description of Drawings

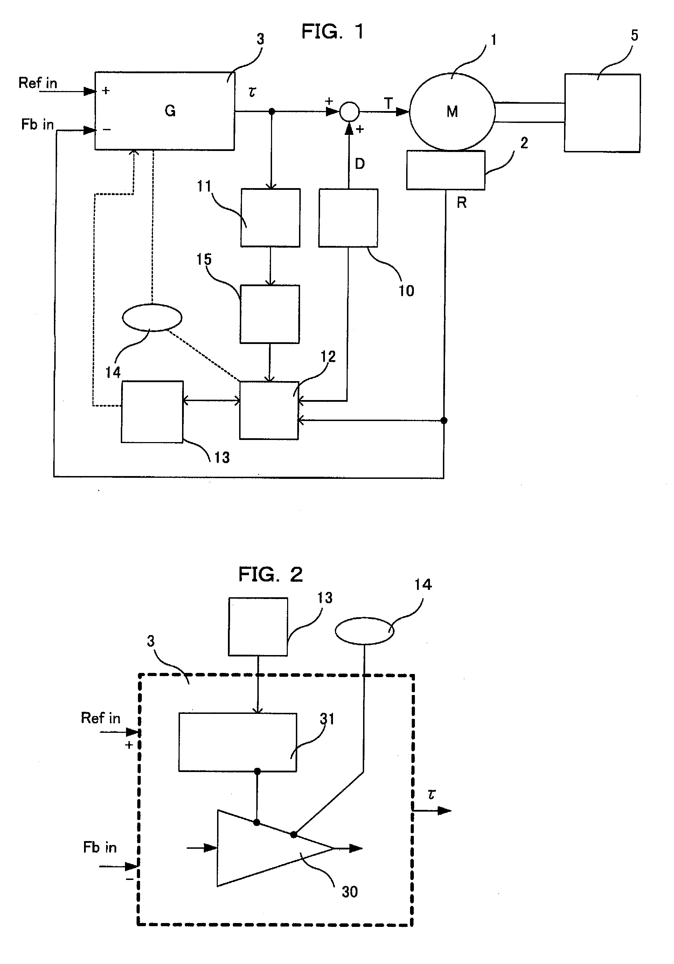

[Fig. 1] Fig. 1 is a diagram illustrating the structure of a motor controller according to a first embodiment of the present invention.

[Fig. 2] Fig. 2 is a diagram illustrating the structure of a control unit according to the first embodiment of the present invention.

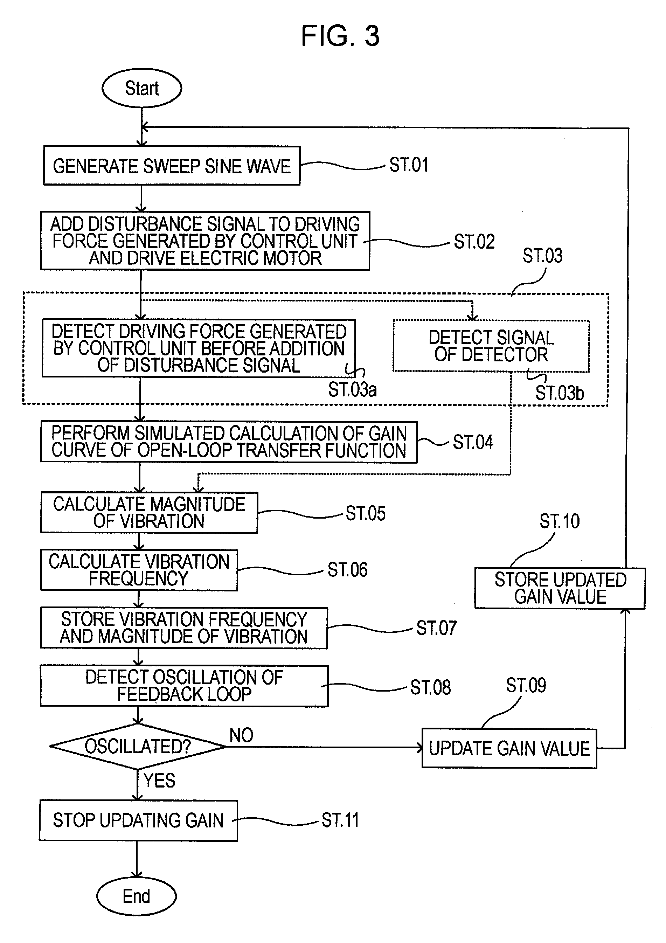

[Fig. 3] Fig. 3 illustrates the procedure of a gain adjusting method for the motor controller according to the first embodiment of the present invention.

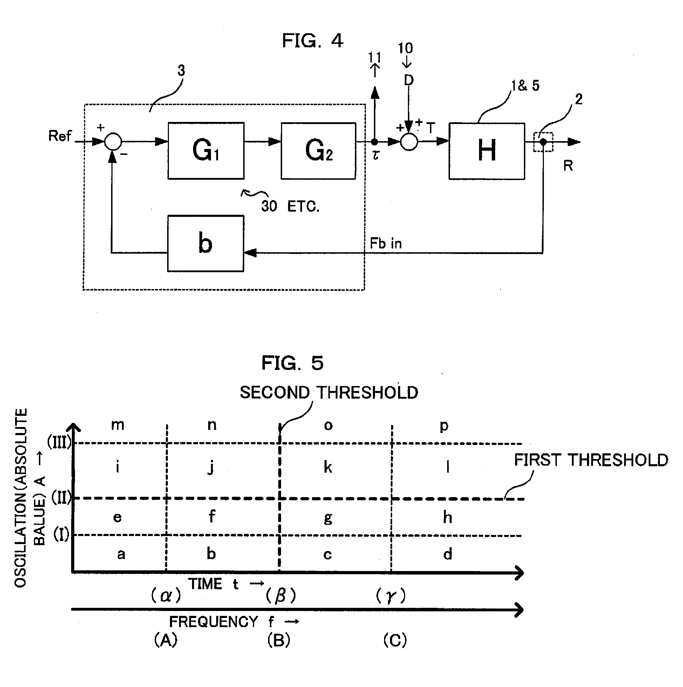

[Fig. 4] Fig. 4 is a simplified block diagram illustrating the calculation of a gain curve of a simulated open-loop transfer function performed by a simulated open-loop gain calculator included in the motor controller according to the first embodiment of the present invention (simplified block diagram illustrating the calculation of an open-loop transfer function performed by an open-loop transfer function calculator).

[Fig. 5] Fig. 5 is a conceptual diagram of an oscillation detection based on a first threshold and a second threshold according to the first embodiment of the present invention.

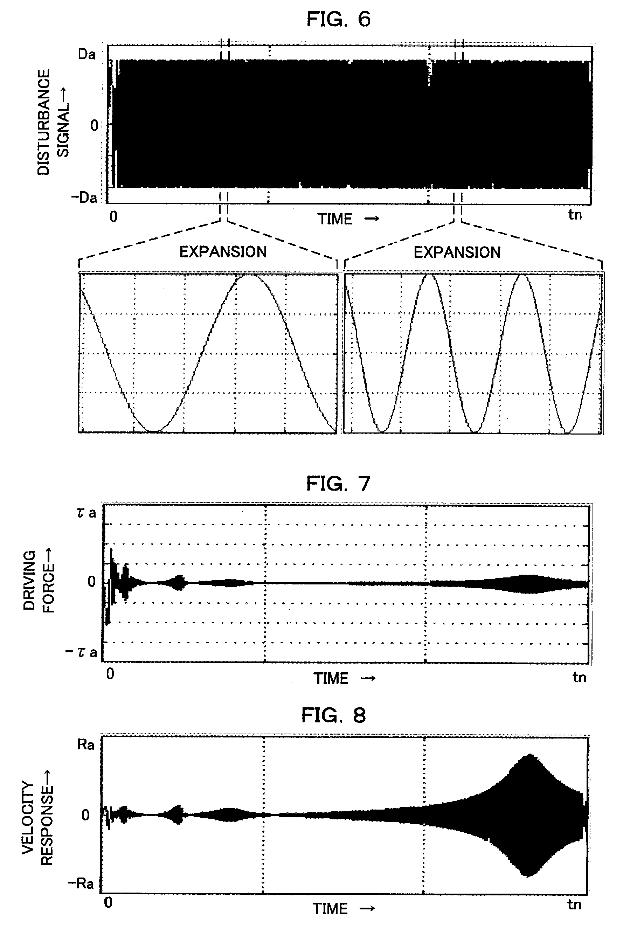

[Fig. 6] Fig. 6 is a diagram illustrating a sweep sine wave which functions as a disturbance signal according to the first embodiment of the present invention.

[Fig. 7] Fig. 7 is a diagram illustrating a driving force before the addition of the disturbance signal according to the first embodiment of the present invention.

[Fig. 8] Fig. 8 is a diagram illustrating a response detected by a detector when the disturbance signal is input according to the first embodiment of the present invention.

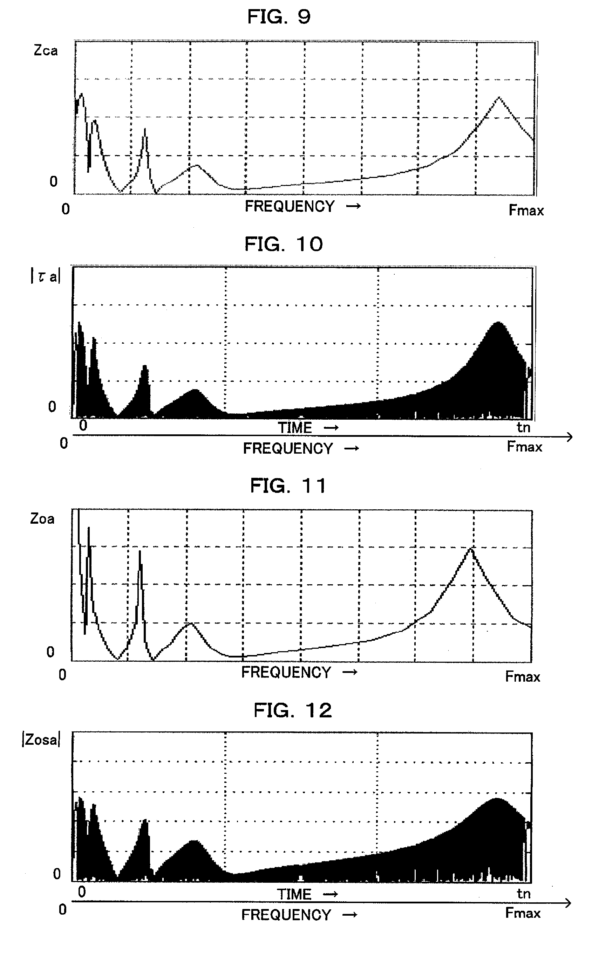

[Fig. 9] Fig. 9 is a diagram illustrating the closed-loop characteristic according to the first embodiment of the present invention.

[Fig. 10] Fig. 10 is a diagram illustrating the absolute value of the driving force before the addition of the disturbance signal according to the first embodiment of the present invention.

[Fig. 11] Fig. 11 is a diagram illustrating the open-loop transfer function according to the first embodiment of the present invention.

[Fig. 12] Fig. 12 is a diagram illustrating the result of simulated calculation of a gain curve of the open-loop transfer function based on the driving force before the addition of the disturbance signal according to the first embodiment of the present invention.

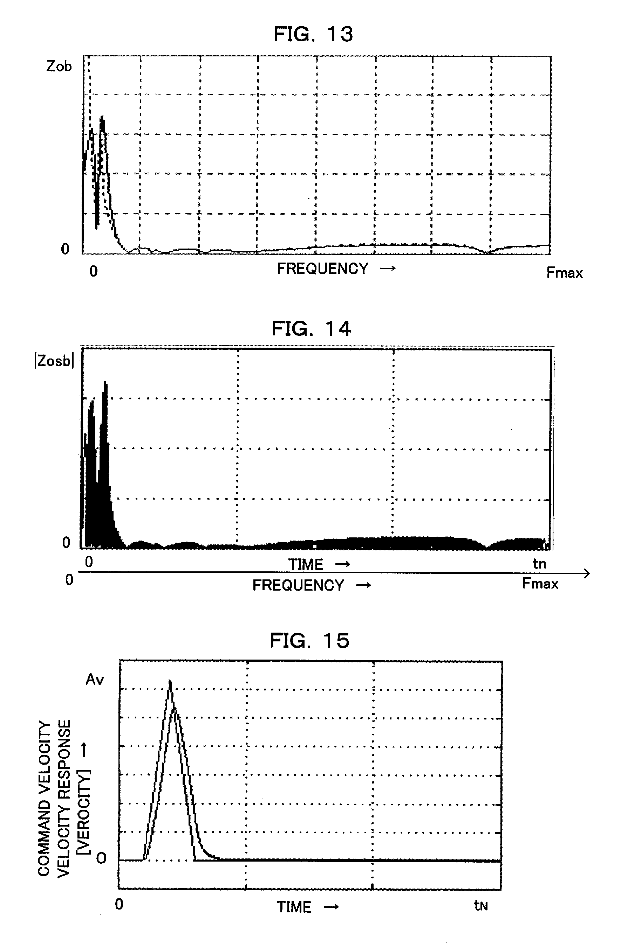

[Fig. 13] Fig. 13 is a diagram illustrating the closed-loop characteristic and the open-loop transfer function according to the first embodiment of the present invention.

[Fig. 14] Fig. 14 is a diagram illustrating the result of simulated calculation of a gain curve of the open-loop transfer function based on the driving force before the addition of the disturbance signal according to the first embodiment of the present invention.

[Fig. 15] Fig. 15 is a diagram illustrating the command velocity and velocity response in a positioning operation according to the first embodiment of the present invention.

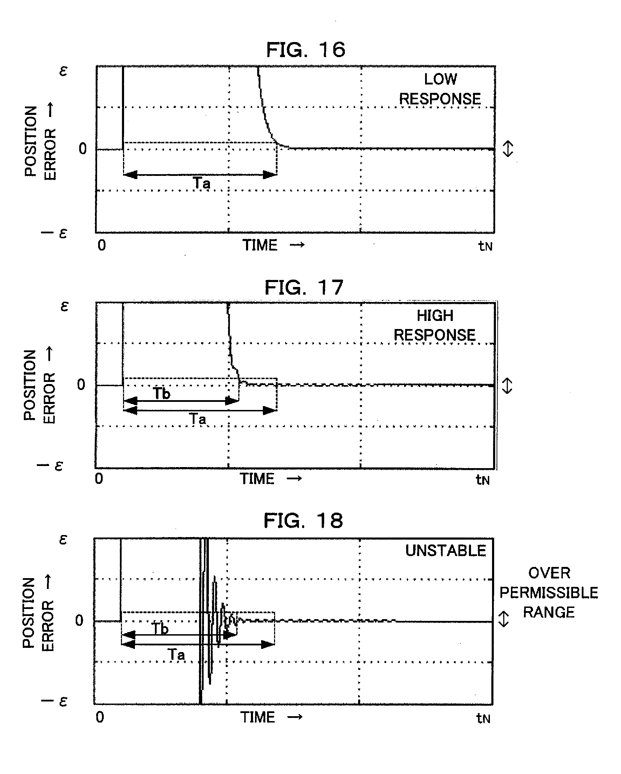

[Fig. 16] Fig. 16 is a diagram illustrating the position error in the positioning operation according to the first embodiment of the present invention (low response).

[Fig. 17] Fig. 17 is a diagram illustrating the position error in the positioning operation according to the first embodiment of the present invention (high response).

[Fig. 18] Fig. 18 is a diagram illustrating the position error in the positioning operation according to the first embodiment of the present invention (unstable).

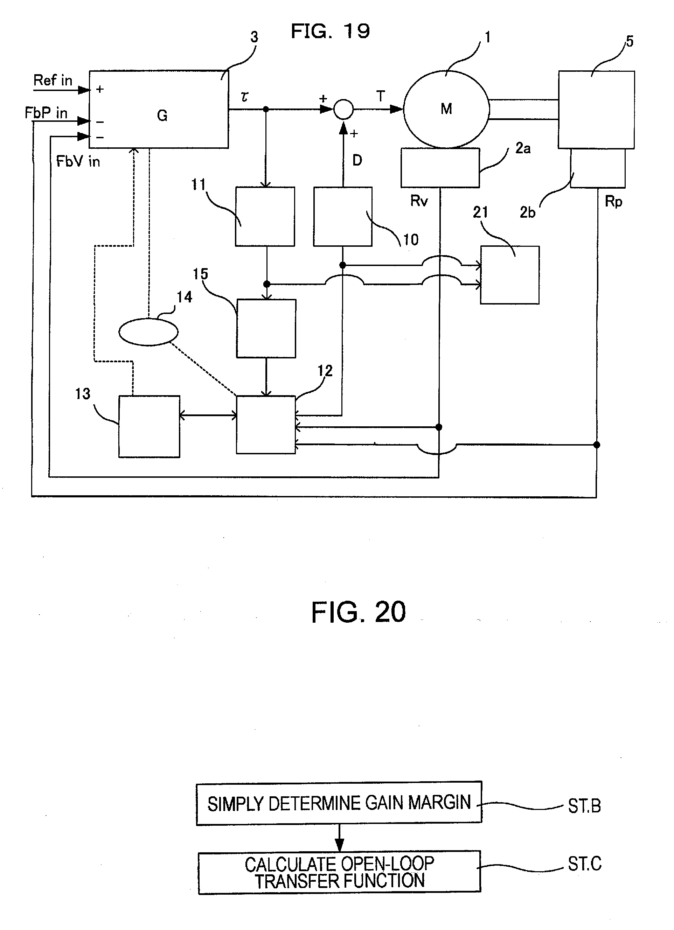

[Fig. 19] Fig. 19 is a diagram illustrating the structure of a motor controller according to a second embodiment of the present invention.

[Fig. 20] Fig. 20 illustrates a schematic procedure of a gain adjusting method for the motor controller according to the second embodiment of the present invention.

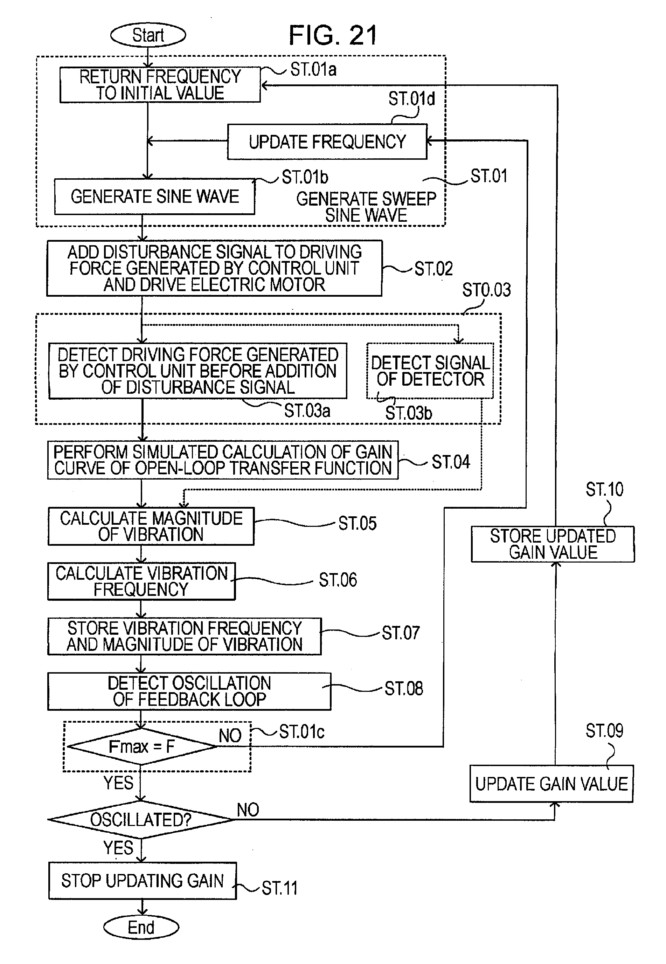

[Fig. 21] Fig. 21 illustrates the detailed procedure of the gain adjusting method for the motor controller according to the second embodiment of the present invention.

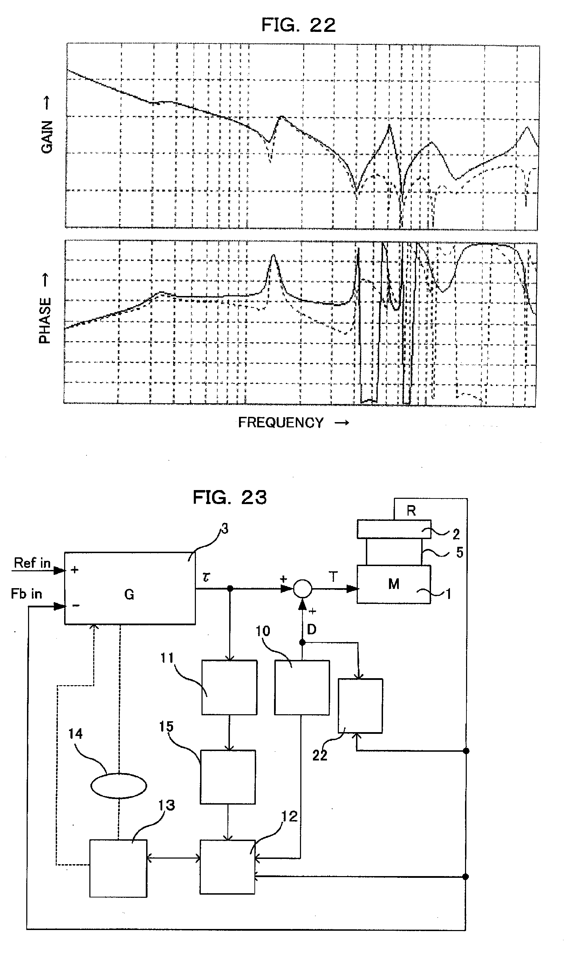

[Fig. 22] Fig. 22 is a diagram illustrating an open-loop transfer function of the motor controller according to the second embodiment of the present invention.

[Fig. 23] Fig. 23 is a diagram illustrating the structure of a motor controller according to a third embodiment of the present invention.

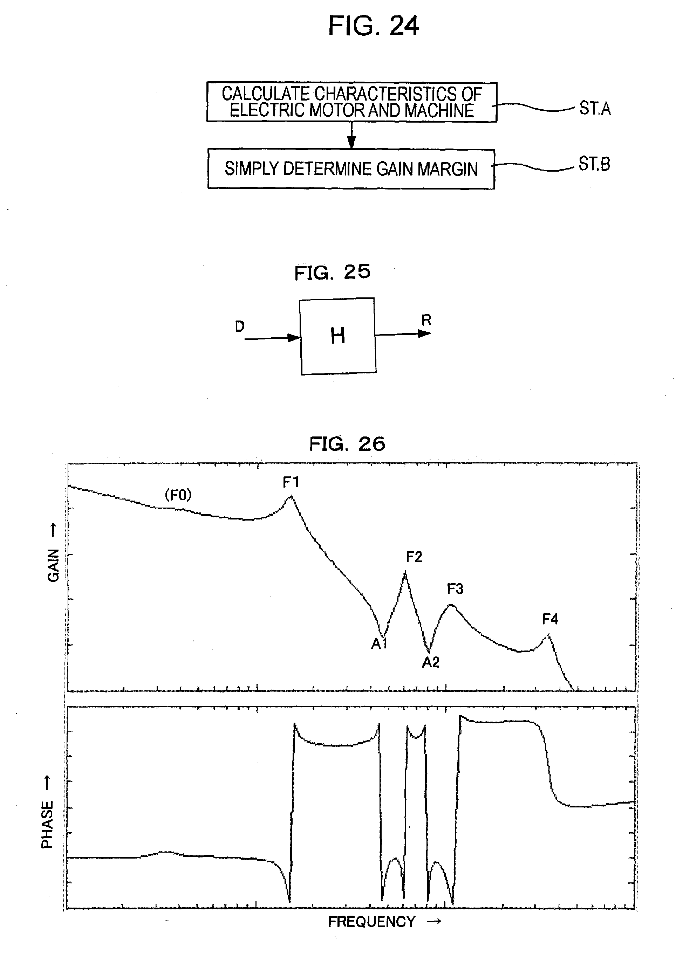

[Fig. 24] Fig. 24 illustrates a schematic procedure of a gain adjusting method for the motor controller according to the third embodiment of the present invention.

[Fig. 25] Fig. 25 is a simplified block diagram illustrating the calculation of characteristics of an electric motor and a machine performed by a mechanical characteristic calculator included in the motor controller according to the third embodiment of the present invention.

[Fig. 26] Fig. 26 is a diagram illustrating the characteristics of the electric motor and the machine in the motor controller according to the third embodiment of the present invention.

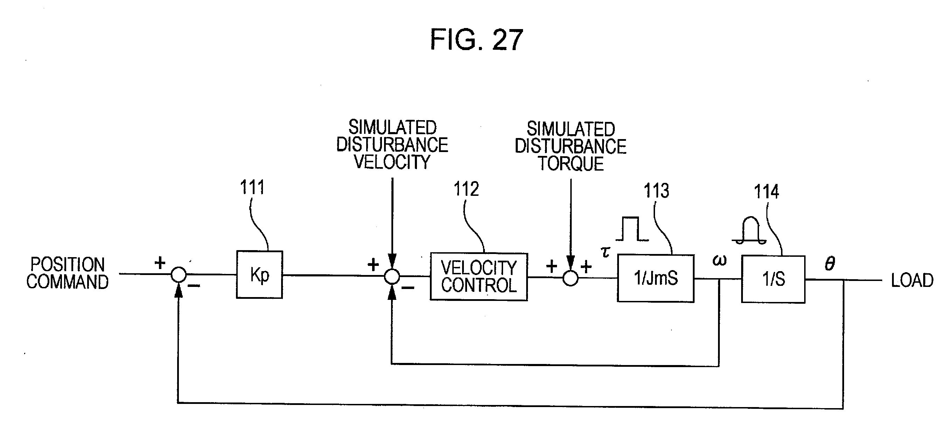

[Fig. 27] Fig. 27 is a control block diagram of a servo control apparatus according to Patent Document 1, which is a first related art.

[Fig. 28] Fig. 28 is a diagram illustrating vibration generated when the gain is increased, reduction in gain for when the vibration is generated, and limit-gain extraction timing according to Patent Document 1, which is the first related art.

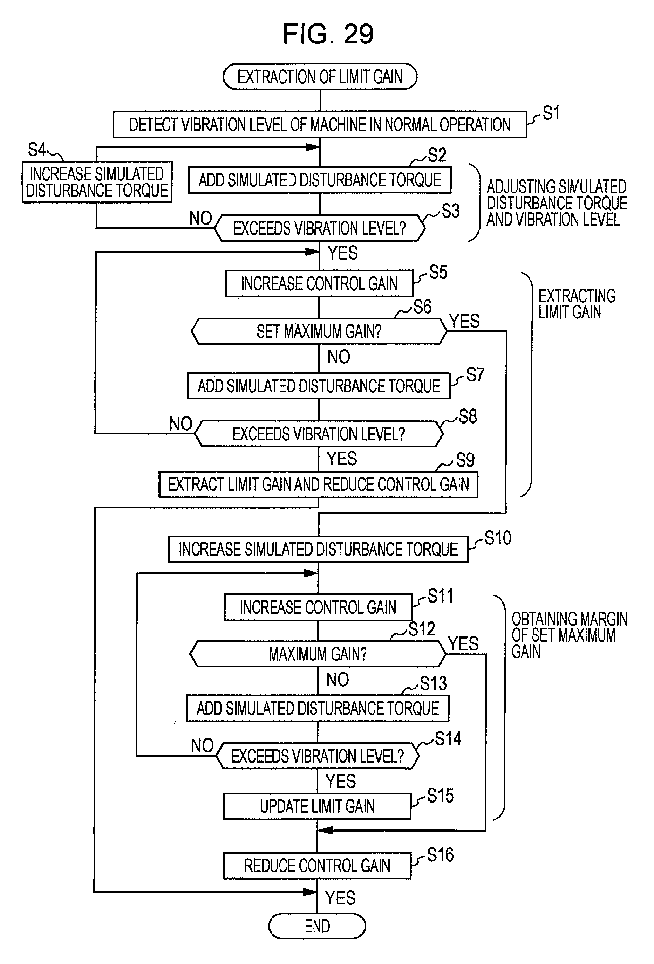

[Fig. 29] Fig. 29 is a flowchart of a limit-gain extracting process according to Patent Document 1, which is the first related art.

[Fig. 30] Fig. 30 is a block diagram illustrating the structure of a resonance frequency detector according to Patent Document 2, which is a second related art.

[Fig. 31] Fig. 31 illustrates a time response wave according to Patent Document 2, which is the second related art.

[Fig. 32] Fig. 32 illustrates an example of dynamic characteristics estimation using a Bode diagram of an open-loop system (open-loop transfer function) according to Non-Patent Document 1, which is a third related art.

Reference Numerals

| 1 | electric motor |
| 2, 2a, 2b | operation-amount detector |
| 3 | control unit |
| 5 | machine |
| 10 | disturbance signal generator |
| 11 | compensation-driving-force detector |
| 12 | vibration calculator |
| 13 | oscillation detector |
| 14 | vibration storage |
| 15 | simulated open-loop gain calculator |
| 21 | open-loop transfer function calculator |
| 22 | machine-characteristics calculator |
| 30 | gain changer |
| 31 | automatic gain changer |
| 111 | Kp |
| 112 | velocity control |
| 113 | motor |
| 114 | integration |
| 201 | command generator |
| 202 | control unit |
| 203 | electric motor |
| 204 | machine |
| 205 | detecting means |
| 206 | signal processor |
| C | command signal |
| m | amount of operation of motor |
| x | amount of operation of machine |
| S | response signal |
| A | frequency information of sweep sine wave command |
| f | detection result of resonance frequency |

Best Modes for Carrying Out the Invention

Embodiments of the present invention will be described with reference to the drawings. Although various functions and means are mounted in actual motor controllers, only functions and means related to the present invention are shown in the diagrams and described herein. In addition, in the following description, components having the same names are basically denoted by the same reference numerals, and redundant explanations thereof are thus omitted.

[First Embodiment]

Fig. 1 is a diagram illustrating the structure of a motor controller according to a first embodiment of the present invention. Fig. 2 is a diagram illustrating the structure of a control unit according to the first embodiment of the present invention. In Fig. 1, reference numeral 1 denotes an electric motor, 2 denotes a detector, 3 denotes a control unit, 5 denotes a machine, 10 denotes a disturbance signal generator, 11 denotes a compensation-driving-force detector, 12 denotes a vibration calculator, 13 denotes an oscillation detector, 14 denotes a vibration storage, and 15 denotes a simulated open-loop gain calculator. In addition, in Fig. 2, reference numeral 30 denotes a gain changer and 31 denotes an automatic gain changer. The oscillation detector 13 detects an oscillation on the basis of a first threshold and a second threshold (not shown).

Fig. 3 illustrates the procedure of a gain adjusting method for the motor controller according to the first embodiment of the present invention.
Referring to Fig. 3, ST.01 is a step of generating a sweep sine wave, and ST.02 is a step of adding a disturbance signal to a driving force generated by the control unit 3 and driving the electric motor 1. ST.03 is a step of detecting the driving force generated by the control unit 3 (ST.03a) or a step of detecting a signal of the detector 2 (ST.03b), and ST.04 is a step of performing simulated calculation of a gain curve of an open-loop transfer function. ST.05 is a step of detecting the magnitude of vibration, ST.06 is a step of detecting a vibration frequency, and ST.07 is a step of storing the vibration frequency and the magnitude of vibration. ST.08 is a step of detecting an oscillation of a feedback loop, and ST.09 is a step of updating a gain value. ST.10 is a step of storing the updated gain value, and ST.11 is a step of stopping the process of updating the gain value.

The present invention differs from the first related art in that the simulated open-loop gain calculator 15 is provided, that the disturbance signal generator 10 generates a sweep sine wave, and that the oscillation detector 13 detects an oscillation on the basis of the first threshold and the second threshold (not shown).

In addition, the present invention differs from the second related art in that the compensation-driving-force detector 11, the oscillation detector 13, the vibration storage 14, the simulated open-loop gain calculator 15, the gain changer 30, and the automatic gain changer 31 are provided.

In addition, the present invention differs from the third related art in that the open-loop transfer function is not calculated as a result of frequency analysis. Therefore, the present invention differs from the third related art in that the simulated open-loop gain calculator 15 is provided, and that the vibration calculator 12, the oscillation detector 13, the vibration storage 14, the gain changer 30, and the automatic gain changer 31 are additionally provided.

In the operation, the procedure shown in Fig. 3 is carried out to adjust the gain value of the control unit 3 by updating the gain value of the control unit 3 and detecting an oscillation.

Before describing the operation in detail, the basic principle of the first embodiment of the present invention will be described.

Fig. 4 is a simplified block diagram illustrating the calculation of a gain curve of a simulated open-loop transfer function performed by the simulated open-loop gain calculator included in the motor controller according to the first embodiment of the present invention. In Fig. 4, $G_1$ denotes a first control unit, $G_2$ denotes a second control unit, b denotes a feedback compensator, and H denotes a machine. The machine H includes the characteristics of both the electric motor and the machine to be controlled.

Fig. 4 is also a simplified block diagram illustrating the calculation of an open-loop transfer function that is commonly known.

An open-loop transfer function Zo described in the third related art is calculated as follows. That is, first, a disturbance signal D shown in Fig. 4 and a driving force $\tau$ generated by the control unit 3 are measured, and a closed-loop characteristic Zc is calculated from Equation (1).

Then, the open-loop transfer function Zo is calculated from Equation (2).

$$Z_C(\omega) = \frac{\tau(\omega)}{D(\omega)} = -\frac{b(\omega) \cdot H(\omega) \cdot G_1(\omega) \cdot G_2(\omega)}{1 + b(\omega) \cdot H(\omega) \cdot G_1(\omega) \cdot G_2(\omega)} = -\frac{Z_O(\omega)}{1 + Z_O(\omega)} \qquad \text{Eq. (1)}$$

$$Z_O(\omega) = -\frac{Z_C(\omega)}{1 + Z_C(\omega)} = b(\omega) \cdot H(\omega) \cdot G_1(\omega) \cdot G_2(\omega) \qquad \text{Eq. (2)}$$

Here, $\tau(\omega)$ and $D(\omega)$ are obtained as a result of frequency analysis of the driving force $\tau$ and the disturbance signal D, respectively, and the closed-loop characteristic $Zc(\omega)$ is simply obtained by dividing the driving force $\tau(\omega)$ by the disturbance signal $D(\omega)$ as in Equation (1).

Since the closed-loop characteristic $Zc(\omega)$ is constituted by the open-loop transfer function $Zo(\omega)$, the open-loop transfer function $Zo(\omega)$ can be obtained by a calculation according to Equation (2).

However, as described above, a high-performance operation device capable of performing frequency analysis is necessary to carry out this method. In addition, it is inefficient to calculate the open-loop transfer function $Zo(\omega)$ each time the gain value is changed.

Fig. 5 is a conceptual diagram of an oscillation detection based on the first threshold and the second threshold according to the first embodiment of the present invention. The signal from the compensation-driving-force detector 11 is evaluated using the graph shown in Fig. 5, and an oscillation is detected on the basis of the first threshold and the second threshold.

The first threshold is a threshold for the vertical axis of the graph shown in Fig. 5, and is used to evaluate the magnitude of the signal. The second threshold is a threshold for the horizontal axis of the graph shown in Fig. 5, and is used to evaluate the frequency. With regard to the evaluation of frequency, since the input disturbance signal is a sweep sine wave, the frequency at any time point of the sweep sine wave is known. If it is assumed that the frequency of the response signal depends on the frequency of the input signal, the frequency at any time point of the signal from the compensation-driving-force detector 11 can be determined.

The signal from the compensation-driving-force detector 11 is the response to the sweep sine wave, and includes negative and positive values. Therefore, the absolute value of the signal is used. A signal from the detector 2 can also be subjected to the evaluation using thresholds for the vertical axis and the horizontal axis.

Fig. 6 is a diagram illustrating the sweep sine wave which functions as the disturbance signal according to the first embodiment of the present invention. The sweep sine wave is obtained by linearly changing the frequency of a sine wave from 0 Hz to Fmax Hz in tn seconds.

Fig. 7 is a diagram illustrating the driving force before the addition of the disturbance signal according to the first embodiment of the present invention, and Fig. 8 is a diagram illustrating the response detected by the detector when the disturbance signal is input according to the first embodiment of the present invention. In the motor controller having the structure shown in Fig. 1 or Fig. 4, when the sweep sine wave shown in Fig. 6 is applied as the disturbance signal, the response signal shown in Fig. 7 is obtained from the compensation-driving-force detector 11 and the response signal shown in Fig. 8 is obtained from the detector 2.

Fig. 9 is a diagram illustrating the closed-loop characteristic according to the first embodiment of the present invention. The graph shown in Fig. 9 is obtained as a result of calculation of the closed-loop characteristic of the structure shown in Fig. 1 or Fig. 4. Note that although logarithmic scales (LOG, dB) are generally used on both vertical and horizontal axes in a graph showing the closed-loop characteristic, linear scales are used on both vertical and horizontal axes in Fig. 9. As shown in Equation (1), the closed-loop characteristic $Zc(\omega)$ can be calculated from the disturbance signal $D(\omega)$ and the driving force $\tau(\omega)$.

Fig. 10 is a diagram illustrating the absolute value of the driving force before the addition of the disturbance signal according to the first embodiment of the present invention.

Since the disturbance signal D is the sweep sine wave and the amplitude thereof is constant, the disturbance signal $D(\omega)$ has the constant amplitude in the frequency range in which the frequency is swept. Therefore, the shape of the graph showing the gain of the closed-loop characteristic $Zc(\omega)$ in Fig. 9 is qualitatively close to that of the graph showing only the driving force $\tau(\omega)$. This can also be said for the graphs versus time. In addition, since the characteristics of frequency are shown on the horizontal axis due to the sweep sine wave, when a graph is drawn by plotting the absolute value of amplitude of the driving force $\tau(t)$ in time series on the vertical axis, as shown in Fig. 10, a graph having the shape close to that of the graph showing the gain of the closed-loop characteristic $Zc(\omega)$ (Fig. 9) is obtained.

Fig. 11 is a diagram illustrating the open-loop transfer function according to the first embodiment of the present invention. Fig. 12 is a diagram illustrating the result of simulated calculation of a gain curve of the open-loop transfer function based on the driving force before the addition of the disturbance signal according to the first embodiment of the present invention. Similar to Fig. 9, linear scales are used on both the vertical and horizontal axes in Fig. 11.

Similar to the relationship between Figs. 9 and 10, the graph shown in Fig. 12 is obtained by causing the simulated open-loop gain calculator 15 to perform a calculation corresponding to Equation (2) using the absolute value of the driving force $\tau(t)$ in time series. The shape of the graph shown in Fig. 12 is qualitatively close to that of the gain curve of the open-loop transfer function (Fig. 11). Therefore, the graph shown in Fig. 12 can be used as the gain curve of a simple, simulated open-loop transfer function.

By using the above-described phenomenon, the gain adjustment can be performed by the procedure shown in Fig. 3.

First, in step ST.01, which is the step of generating the sweep sine wave, the disturbance signal generator 10 generates the sweep sine wave shown in Fig. 6 as the disturbance signal.

Then, the procedure proceeds to step ST.02, which is the step of adding the disturbance signal to the driving force generated by the control unit 3 and driving the electric motor 1, and the electric motor 1 is driven accordingly. At this time, the command input (input to Refin in Fig. 1) supplied to the control unit 3 may be set to 0. When the electric motor 1 is driven, the machine 5 is activated by the driving force corresponding to the disturbance signal. The detector 2 detects the amount of operation of the electric motor 1 and feeds the detected amount of operation to the control unit 3. The control unit 3 outputs a compensation driving force which compensates for the amount of operation to achieve the command input 0 supplied to the control unit 3.

Thus, step ST.03a, which is the step of detecting the driving force generated by the control unit 3 and step ST.03b, which is the step of detecting the signal of the detector 2, are performed. The compensation-driving-force detector 11 detects the compensation driving force as shown in Fig. 7, and the detector 2 detects the amount of operation as shown in Fig. 8.

Next, the procedure proceeds to step ST.04, which is the step of performing simulated calculation of the gain curve of the open-loop transfer function, and the simulated open-loop gain calculator 15 calculates the gain curve of the simulated open-loop transfer function as shown in Fig. 12 on the basis of the compensation driving force detected by the compensation-driving-force detector 11 as shown in Fig. 7. The gain portion of the simulated closed-loop characteristic as shown in Fig. 10 may also be calculated from the amount of operation detected by the detector 2 as shown in Fig. 8. Then, in step ST.05, which is the step of detecting the magnitude of vibration, the signal magnitude is detected on the basis of the signal from the compensation-driving-force detector 11 or the signal from the detector 2. Then, in step ST. 06, which is the step of detecting the vibration frequency, the vibration frequency is detected on the basis of the frequency of the input sweep sine wave corresponding to the time point at which the signal magnitude is large.

If the detection result from the compensation-driving-force detector 11 is processed in step ST.04 to obtain the gain curve of the simulated open-loop transfer function, the process performed in step ST.04 is equivalent to a simplified calculation of the open-loop transfer function shown in Fig. 11. Steps ST.05 and ST.06 are performed by the vibration calculator 12.

Since the signal magnitude and the vibration frequency are detected, in step ST.07, which is the step of storing the vibration frequency and the magnitude of vibration, the signal magnitude and the vibration frequency are stored in the vibration storage 14. Here, there may be a plurality of signal magnitudes and vibration frequencies.

Next, the procedure proceeds to step ST.08, which is the step of detecting an oscillation of the feedback loop. In step ST.08, the oscillation detector 13 detects an oscillation on the basis of the signal magnitudes and the vibration frequencies using the first threshold for the signal magnitudes and the second threshold for the vibration frequencies, as shown in Fig. 5.

If the oscillation is not detected (oscillation is No), the procedure proceeds to step ST.09, which is the step of updating the gain value. More specifically, the automatic gain changer 31 changes the gain changer 30 included in the control unit 3 shown in Fig. 2. Generally, the gain value is started from a low value, and is increased.

After the gain value of the control unit 3 is updated, in step ST.10, which is the step of storing the updated gain value, the updated gain value is stored in the vibration storage 14 together with the previous gain values.

After the steps of updating and storing the gain value are completed, the procedure returns to step ST.01, and the following steps are repeated under the new gain value.

Since the gain value has been changed, the response signals from the detector 2 and the compensation-driving-force detector 11 and the shapes of the graphs shown in Fig. 10 and 12 are also changed. If the closed-loop characteristic shown in Fig. 9 and the open-loop transfer function shown in Fig. 11 are obtained, they are also changed.

The above-described processes are performed as in the previous cycle. Then, if the oscillation is detected (oscillation is Yes) in step ST.08, the procedure proceeds to step ST.11, which is the step of stopping the process of updating the gain value. In step ST.11, the oscillation detector 13 stops the automatic gain changer 31 in the control unit 3, reads the gain value at which the oscillation does not occur from the vibration storage 14, and sets the thus-obtained gain value in the gain changer 30 in the control unit 3, so that the state in which the oscillation does not occur is reestablished.

Thus, the process of adjusting the gain value is completed.

In the case where a plurality of peaks can be observed in the response signals from the compensation-driving-force detector 11 and the detector 2 as shown in Figs. 7 and 8, the graphs shown in Figs. 10 and 12 are obtained. In this case, if large vibrations are detected and the vibration frequencies thereof are determined in steps ST.05 and ST.06, a notch filter or the like can be applied. The filter may be applied when the gain value is updated in step ST.10.

Fig. 13 is a diagram illustrating the closed-loop characteristic and the open-loop transfer function according to the first embodiment of the present invention, and Fig. 14 is a diagram illustrating the result of the simulated calculation of the gain curve of the open-loop transfer function based on the driving force before the addition of the disturbance signal according to the first embodiment of the present invention.

Fig. 13 shows the result obtained by applying a filter to the case shown in Fig. 11, and Fig. 14 shows the result obtained by applying a filter to the case shown in Fig. 12.

Thus, an adjustment of changing the gain value of the control unit 2 can be performed.

Fig. 15 is a diagram illustrating the command velocity and velocity response in a positioning operation according to the first embodiment of the present invention. Fig. 15 shows the response obtained when the gain value is low.

The responsiveness of the control unit 2 can be increased and the positioning time can be reduced by performing the above-described gain adjustment.

Figs. 16, 17, and 18 are diagrams illustrating the position error in the positioning operation according to the first embodiment of the present invention. The position error is a difference between the position corresponding to the operation command and the actual operation position.

Fig. 16 shows the case in which the gain adjustment is not yet performed and the gain value is low. Fig. 17 shows the case in which the gain adjustment is performed and the gain value is high. Fig. 18 shows the case in which the gain value is further increased after the gain adjustment.

It can be determined that the positioning operation has been completed if the position error is reduced to within an allowable range that is equal to or less than a certain value. In Fig. 16, although an oscillation of the feedback loop does not occur and the stability is ensured, the positioning time Ta is long because the gain is low. In Fig. 17, since the gain value is increased within a range in which the oscillation of the feedback loop does not occur, the positioning time is reduced to Tb (< Ta). In Fig. 18, the gain value is excessively increased so that the oscillation of the feedback loop occurs to some extent. Although the actual position reaches the target position in a short time, vibration occurs and it takes a long time for the position error to be reduced to within the allowable range. Therefore, the positioning time is substantially equal to Tb. In particular, in the mechanism or application in which the overshoot causes a problem, the setting of Fig. 18 cannot be applied to the actual machine.

According to the first embodiment of the present invention, the gain curve of the open-loop transfer function regarding the change in the gain is obtained by simulated calculation, and the gain adjustment is performed on the basis of the first threshold regarding the magnitude of vibration and the second threshold regarding the vibration frequency.

[Second Embodiment]

Fig. 19 is a diagram illustrating the structure of a motor controller according to a second embodiment of the present invention.

Fig. 20 illustrates a schematic procedure of a gain adjusting method for the motor controller according to the second embodiment of the present invention, and Fig. 21 illustrates the detailed procedure of the gain adjusting method for the motor controller according to the second embodiment of the present invention.

In Fig. 19, reference numeral 21 denotes an open-loop transfer function calculator, and 2a and 2b denote operation-amount detectors. In addition, in Fig. 20, ST.B is a step of simply evaluating a gain margin, and ST.C is a step of calculating an open-loop transfer function. In addition, in Fig. 21, ST.01a is a step of returning a frequency to an initial value, ST.01b is a step of generating a sine wave, ST.01c is a step of determining whether the upper frequency limit has been reached, and ST.01d is a step of updating the frequency.

The present invention differs from the first embodiment in that the open-loop transfer function calculator 21 is provided, that the two detectors 2a and 2b, which are the operation-amount detector 2a for detecting an amount of operation of the electric motor 1 and the operation-amount detector 2b for detecting an amount of operation of the machine 5, are provided, and that a full-closed feed back is structured.

Step ST.B, which is the step of simply evaluating the gain margin, is equivalent to the processes according to the first embodiment of the present invention. However, Step ST.B differs from the processes according to the first embodiment of the present invention in that step ST.01, which is the step of generating the sweep sine wave, according to the first embodiment of the present invention is divided into four steps, i.e., step ST.01a of returning the frequency to the initial value, step ST.01b of generating a sine wave, step ST.01c of determining whether the upper frequency limit has been reached, and step ST.01d of updating the frequency.

The present invention differs from the first related art in that the simulated open-loop gain calculator 15 and the open-loop transfer function calculator 21 is provided, that the disturbance signal generator 10 generates a (sweep) sine wave, and that the oscillation detector 13 detects the oscillation on the basis of the first threshold and the second threshold (not shown).

In addition, the present invention differs from the second related art in that the compensation-driving-force detector 11, the oscillation detector 13, the vibration storage 14, the simulated open-loop gain calculator 15, the open-loop transfer function calculator 21, the gain changer 30, and the automatic gain changer 31 are provided.

The present invention is similar to the third related art in that the open-loop transfer function calculator 21 is provided to obtain the open-loop transfer function. However, the present invention differs from the third related art in that the simulated open-loop gain calculator 15 are provided, and that the vibration calculator 12, the oscillation detector 13, the vibration storage 14, the gain changer 30, and the automatic gain changer 31 are additionally provided.

In the structure shown in Fig. 19, step ST.B shown in Fig. 20, which is the step of simply evaluating the gain margin, is performed using the same components as those used in the first embodiment. In addition, the open-loop transfer function calculator 21, which is not included in the structure of the first embodiment, is used to perform step ST.C, which is the step of calculating the open-loop transfer function. In step ST.B, the gain is simply adjusted at a high speed. In step ST.C, the result of the gain adjustment is confirmed.

Step ST.B, which is the step of simply evaluating the gain margin and which is equivalent to the processes according to the first embodiment, will be described with reference to Fig. 21 by comparing the step with the processes according to the first embodiment.

In the first embodiment, the sweep sine wave shown in Fig. 6 is generated to obtain the responses shown in Figs. 7 and 8, and the process shown in Fig. 12 is performed to determine the magnitude of vibration and the vibration frequency. Then, the oscillation is detected on the basis of two kinds of thresholds.

In the present embodiment, the disturbance signal is obtained by linearly increasing the frequency of a sine wave in $N_{max}$ steps from 0 Hz to Fmax Hz, by Fmax/$N_{max}$ every tn seconds, so that the frequency changes in tn×$N_{max}$ seconds in total. In the first step from 0 to tn seconds, the disturbance signal is a sine wave with a frequency of $f_1$. In the next step from tn to tnx2 seconds, the disturbance signal is a sine wave with a frequency of $f_2$. In the Nth step from tn×(N-1) to tnxN seconds, the disturbance signal is a sine wave with a frequency of $f_N$. Thus, the processes similar to those in the first embodiment are performed for each of the sine waves $f_N$ with constant frequencies while the frequency is changed.

In step ST.B, which is the step of simply evaluating the gain margin, the frequency is set to the initial value in step ST.01a, which is the step of returning the frequency to the initial value. Then, the sine wave is generated in step ST.01b, which is the step of generating the sine wave.

Then, similar to the first embodiment, the procedure proceeds to step ST.02, which is the step of adding the disturbance signal to the driving force generated by the control unit 3 and driving the electric motor 1, and the electric motor 1 is driven accordingly. At this time, the command input (input to Refin in Fig. 1) supplied to the control unit 3 may be set to 0. In step ST.03a, which is the step of detecting the driving force generated by the control unit 3 and step ST.03b, which is the step of detecting the signal of the detector 2, the operation-amount detector 2 detects the amount of operation of the electric motor 1 and feeds the detected amount of operation to the control unit 3. The control unit 3 outputs a compensation driving force which compensates for the amount of operation to achieve the command input 0 supplied to the control unit 3. Since the disturbance signal is a sine wave with the constant frequency, the response signals detected by the operation-amount detector 2 and the compensation-driving-force detector 11 also have a constant vibration frequency equal to the input frequency.

Then, also in step ST.04, which is the step of performing simulated calculation of the gain curve of the open-loop transfer function, a process similar to that in the first embodiment is performed. However, a graph similar to that shown in Fig. 12 according to the first embodiment cannot be obtained, and only the value of a gain (absolute value of amplitude) at a certain point on the horizontal axis in Fig. 12 (currently a minimum frequency set as the initial value) is obtained.

In step ST.05, which is the step of detecting the magnitude of vibration, the gain (absolute value of amplitude) is recognized. In step ST.06, which is the step of detecting the vibration frequency, the input frequency, which is already known, is recognized again. The thus-obtained values are stored in step ST.07, which is the step of storing the vibration frequency and the magnitude of vibration. In the present embodiment, the magnitude of vibration for each of the input frequencies is stored in the vibration storage 14.

Next, the procedure proceeds to step ST.08, which is the step of detecting an oscillation of the feedback loop.

In step ST.08, a process similar to that in the first embodiment is performed. The occurrence of oscillation may be detected and stored in the vibration storage 14. However, if the maximum frequency has not yet been reached, the following process is not changed in accordance with the occurrence of oscillation. If it is determined that the maximum frequency has not yet been reached in step ST.01c, which is the step of determining whether the upper frequency limit has been reached, the procedure proceeds to step ST.01d, which is the step of updating the frequency, and returns to step ST.01b, which is the step of generating a sine wave. Thus, the processes similar to those in the first embodiment are performed for each frequency.

If it is determined that the maximum frequency has been reached in step ST.01c performed after step ST.08, it is determined whether or not an oscillation has occurred while the frequency has been increased from the initial value to the maximum value.

If the oscillation has not occurred, the procedure proceeds to step ST.09, which is the step of updating the gain value. After the gain value of the control unit 3 is updated, the procedure proceeds to step ST.10, which is the step of storing the updated gain value, and the updated gain value is stored in the vibration storage 14 together with the previous gain values.

When the process of updating and storing the gain value is completed, the procedure returns to step ST.01. Then, the process is repeated from step ST.01a from the initial frequency.

If the oscillation has occurred, the procedure proceeds to step ST.11, which is the step of stopping the process of updating the gain value.

Thus, similar to the first embodiment, the process of adjusting the gain value is completed.

After step ST.B, which is the step of simply evaluating a gain margin, is completed, step ST.C, which is the step of calculating the open-loop transfer function, is performed as shown in Fig. 20.

Fig. 22 is a diagram illustrating an open-loop transfer function of the motor controller according to the second embodiment of the present invention. The gain adjustment which involves the process of increasing and reducing the gain value is performed in step ST.B. In step ST.C, similar to the third related art, the result of gain adjustment is quantitatively confirmed.

In Fig. 22, the solid and broken lines respectively show the cases in which a filter is absent and present as in Figs. 10 and 13 and Figs. 11 and 14 in the first embodiment. Note that, in Fig. 22, unlike Figs. 10 to 14, logarithmic scales are used on the vertical and horizontal axes.

Thus, the open-loop transfer function varies in accordance with the gain adjustment. In addition, as shown in Fig. 22, the state of application of the filter can also be evaluated in step ST.C.

In the present embodiment, the sine wave having a constant frequency in each step is used as the disturbance signal D. However, the disturbance signal D may also be a sweep sine wave which has a continuous frequency between successive steps.

In addition, the disturbance signal D is not limited to the sine wave. For example, a random wave including a frequency-range component with frequencies higher than the frequency range of the open-loop transfer function Zo to be obtained, an M-sequence signal, etc., may be used to excite the electric motor 1 and the machine 5. Then, the response may be detected by the detector 2 and the open-loop transfer function Zo may be determined from Equations (1) and (2) shown above.

Since the motor controller is structured as described above, the gain can be adjusted such that the operation of the motor controller shown in Fig. 17 according to the first embodiment can be finally obtained.

[Third Embodiment]

Fig. 23 is a diagram illustrating the structure of a motor controller according to a third embodiment of the present invention, and Fig. 24 illustrates a schematic procedure of a gain adjusting method for the motor controller according to the third embodiment of the present invention.

In Fig. 23, reference numeral 22 denotes a mechanical characteristic calculator. In Fig. 24, step ST.A is a step of calculating the characteristics of the electric motor and the machine.

The present invention differs from the first embodiment in that the mechanical characteristic calculator 22 is provided. In addition, the relationship between the electric motor 1, the operation-amount detector 2, and the machine 5 shown in Fig. 23 also differs from that in the first embodiment. The electric motor 1 is a linear electric motor, and the machine 5 is directly driven by the electric motor 1. The operation-amount detector 2 is structured such that the amount of operation of the machine 5 is fed back to the control unit 3.

Step ST.A shown in Fig. 24, which is the step of calculating the characteristics of the electric motor and the machine, differs from the process performed in the first embodiment.

The present invention differs from the second embodiment in that the open-loop transfer function calculator 21 is not provided and the mechanical characteristic calculator 22 is provided. In addition, the present invention also differs from the second embodiment in that step ST.C, which is the step of calculating an open-loop transfer function, is not performed and step ST.A, which is the step of calculating the characteristics of the electric motor and the machine, is performed.

Step ST.B shown in Fig. 24, which is the step of simply evaluating the gain margin, is equivalent to the processes according to the first embodiment of the present invention. In this step, either the processes shown in Fig. 3 according to the first embodiment or the processes shown in Fig. 21 according to the second embodiment may be performed. The processes performed in Step ST.B, which is the step of simply evaluating the gain margin, are similar to the processes shown in Fig. 3 according to the first embodiment or the processes shown in Fig. 21 according to the second embodiment.

Alternatively, in step ST.B, which is the step of simply evaluating the gain margin, the procedure of the gain adjusting method shown in Fig. 21 may be improved. In Fig. 21, the process of generating the sine wave is included in a loop for updating the gain value after the detection of oscillation. However, the process of generating the sine wave may also be placed outside the loop for updating the gain value. In such a case, a process of returning the gain value to the initial value must be performed in the loop for updating the gain value.

In addition, although the magnitude of vibration is shown as the absolute value in Figs. 10, 12, and 14 according to the first embodiment, the magnitude of vibration may also be shown as the square value. Alternatively, a square root of the square value may also be used.

In the present embodiment, step ST.A, which is the step of calculating the characteristics of the electric motor and the machine, is performed before step ST.B, which is the step of simply evaluating a gain margin.

Fig. 25 is a simplified block diagram illustrating the calculation of characteristics of the electric motor and the machine performed by the mechanical characteristic calculator included in the motor controller according to the third embodiment of the present invention. The mechanical characteristic H is determined from the disturbance signal D and the response signal R. The disturbance signal D is not limited to the sine wave, and a random wave including a frequency-range component with the frequency range of the mechanical characteristic H to be obtained, an M-sequence signal, etc., may also be used to excite the electric motor 1 and the machine 5. Then, the response is detected by the detector 2, and the mechanical characteristic H is determined from Equation (3).

More specifically, frequency analysis of the disturbance signal D and the response signal R is performed to obtain $S_D(\omega)$ and $S_R(\omega)$. Then, $S_D(\omega)$ and $S_R(\omega)$ are multiplied by complex conjugates $S_D^*(\omega)$ of $S_D(\omega)$ so that auto-power spectrum $A_{D,D}$ and cross spectrum $A_{R,D}$ are obtained. Then, $A_{D,D}$ and $A_{R,D}$ are averaged over N samples, and the cross spectrum is divided by the auto-power spectrum. As a result, the mechanical characteristic H is obtained (the bars above X and A show that they are averaged).

Equations (1) and (2) may also be applied in a similar manner, although the processed signal is different form that in the above-described case.

$$H(\omega) = \frac{\dfrac{1}{n} \cdot \displaystyle\sum_i^n S_R(\omega)_i \cdot S_D^*(\omega)_i}{\dfrac{1}{n} \cdot \displaystyle\sum_i^n S_D(\omega)_i \cdot S_D^*(\omega)_i} = \frac{\overline{X}_{R,D}}{\overline{A}_{D,D}}$$

Eq. (3)

Fig. 26 is a diagram illustrating the characteristics of the electric motor and the machine in the motor controller according to the third embodiment of the present invention. If step ST.A, which is the step of calculating the characteristics of the electric motor and the machine, is performed in advance, the result shown in Fig. 26 can be obtained. Therefore, as shown in Fig. 14 according to the first embodiment, the filter may be provided by the control unit 3 in advance. In addition, the ranges in which the comparison with first threshold and the second threshold is performed can be recognized in advance.

After step ST.A is performed, step ST.B, which is the step of simply evaluating the gain margin, according to the first embodiment or the second embodiment is performed. As a result, the gain can be adjusted such that the operation of the motor controller shown in Fig. 17 according to the first embodiment can be finally obtained.

Industrial Applicability

The gain margin can be simply evaluated and the positioning time can be reduced by adjusting the gain of the motor controller. Therefore, when machines in which motor controllers are mounted are mass-produced, the gain adjustment can be performed individually for each of the motor controllers.

**Claims**

1. A motor controller including a control unit which receives a detection signal from an operation-amount detector and generates a driving force for driving an electric motor in response to a command signal, the operation-amount detector detecting an amount of operation of the electric motor or a machine, a disturbance signal generator which adds a disturbance signal to the driving force generated by the control unit, a compensation-driving-force detector which detects the driving force generated by the control unit, and a vibration calculator which calculates a magnitude of vibration and a vibration frequency, the magnitude of vibration being calculated on the basis of an absolute value or a square value of a signal detected by the compensation-driving-force detector or the operation-amount detector, wherein a feedback loop is provided for controlling the electric motor with the control unit such that the amount of operation matches the command signal, and the motor controller being **characterized by** comprising:
an oscillation detector which detects an oscillation of the feedback loop by evaluating the signal detected by the compensation-driving-force detector or the operation-amount detector on the basis of at least one first predetermined threshold based on a magnitude of the signal detected by the compensation-driving-force detector or the operation-amount detector and at least one second predetermined threshold based on the vibration frequency.

2. The motor controller according to claim 1, further comprising a simulated open-loop gain calculator which performs simulated calculation of a gain curve of an open-loop transfer function using the signal from the compensation-driving-force detector.

3. The motor controller according to claim 2, wherein the disturbance signal added by the disturbance signal generator to the driving force generated by the control unit is a sweep sine wave.

4. The motor controller according to claim 3, wherein the vibration calculator calculates the vibration frequency at a time point at which the magnitude of vibration is large on the basis of the signal detected by the compensation-driving-force detector or the operation-amount detector.

5. The motor controller according to claim 1, wherein the control unit includes a gain changer capable of changing responsiveness of the control unit.

6. The motor controller according to claim 5, further comprising a vibration storage which stores the vibration frequency and the magnitude of vibration detected by the vibration calculator.

7. The motor controller according to claim 6, wherein the vibration storage stores a value of the gain changer.

8. The motor controller according to claim 7, wherein the control unit includes an automatic gain changer which automatically changes the gain changer and which stops changing the gain changer in response to a signal from the oscillation detector and returns the value of the gain changer to a gain stored in the vibration storage.

9. The motor controller according to claim 1, wherein the disturbance signal generator adds a disturbance signal including a wide-range frequency component to the driving force generated by the control unit.

10. The motor controller according to claim 9, further comprising an open-loop transfer function calculator which calculates an open-loop transfer function on the basis of the signal from the compensation-driving-force detector and a signal from the disturbance signal generator.

11. The motor controller according to claim 9, further comprising a mechanical characteristic calculator which calculates characteristics of the electric motor and the machine driven by the electric motor on the basis of the signal from the operation-amount detector and a signal from the disturbance signal generator.

12. A gain adjusting method for a motor controller including a control unit which receives a detection signal from an operation-amount detector and generates a driving force for driving an electric motor in response to a command signal, the operation-amount detector detecting an amount of operation of the electric motor or a machine, wherein a feedback loop is provided for controlling the electric motor with the control unit such that the amount of operation matches the command signal, wherein a sweep sine wave is generated as a disturbance signal, wherein the electric motor is driven by adding the disturbance signal to the driving force generated by the control unit, wherein the driving force generated by the control unit is detected, wherein a magnitude of vibration is calculated on the basis of an absolute value or a square value of the driving force generated by the control unit or the signal from the operation-amount detector, and wherein a vibration frequency at a time point at which the magnitude of vibration is large is calculated on the basis of a frequency of the driving force or the signal from the operation-amount detector, the gain adjusting method being **characterized by** comprising the step of:

   detecting an oscillation of the feedback loop by evaluating the driving force generated by the control unit or the signal from the operation-amount detector on the basis of at least one first predetermined threshold based on a magnitude of the driving force or the signal from the operation-amount detector and at least one second predetermined threshold based on the vibration frequency.

13. The gain adjusting method for the motor controller according to claim 12, further comprising the step of performing simulated calculation of a gain curve of an open-loop transfer function using the driving force generated by the control unit.

14. The gain adjusting method for the motor controller according to claim 12, further comprising the step of changing a gain of the control unit to change responsiveness of the control unit.

15. The gain adjusting method for the motor controller according to claim 14, further comprising the step of storing the vibration frequency and the magnitude of vibration determined on the basis of the driving force generated by the control unit or the signal from the operation-amount detector.

16. The gain adjusting method for the motor controller according to claim 15, further comprising the step of storing a value of the gain of the control unit.

17. The gain adjusting method for the motor controller according to claim 16, further comprising the steps of automatically changing the gain of the control unit; and stopping the step of automatically changing the gain in response to the detection of the oscillation and returning the gain to the stored value.

18. The gain adjusting method for the motor controller according to claim 12, further comprising the steps of generating a signal including a wide-range frequency component instead of the sweep sine wave as the disturbance signal; and calculating an open-loop transfer function from the signal including the wide-range frequency component and the driving force generated by the control unit.

19. The gain adjusting method for the motor controller according to claim 12, further comprising the steps of generating a signal including a wide-range frequency component instead of the sweep sine wave as the disturbance signal; and calculating characteristics of the electric motor and the machine from the signal including the wide-range frequency component and the signal detected by the operation-amount detector.

## FIG. 1

## FIG. 2

# FIG. 3

```
                    ( Start )
                        │
                        ▼
        ┌──────────────────────────────┐
        │  GENERATE SWEEP SINE WAVE    │────── ST.01
        └──────────────────────────────┘
                        │
                        ▼
        ┌──────────────────────────────┐
        │  ADD DISTURBANCE SIGNAL TO   │
        │  DRIVING FORCE GENERATED BY  │────── ST.02
        │  CONTROL UNIT AND DRIVE      │              ST.03
        │  ELECTRIC MOTOR              │
        └──────────────────────────────┘
                        │
        ┌ ─ ─ ─ ─ ─ ─ ─ ┼ ─ ─ ─ ─ ─ ─ ─ ─ ─ ─ ─ ─ ─ ┐
        │               ▼                             │
        │ ┌──────────────────────────┐  ┌──────────────────────┐ │
        │ │ DETECT DRIVING FORCE     │  │  DETECT SIGNAL       │ │
        │ │ GENERATED BY CONTROL     │  │  OF DETECTOR         │ │
        │ │ UNIT BEFORE ADDITION     │  └──────────────────────┘ │
        │ │ OF DISTURBANCE SIGNAL    │         ST.03b             │
        │ └──────────────────────────┘                           │
        │        ST.03a                                          │
        └ ─ ─ ─ ─ ─ ─ ─ ┼ ─ ─ ─ ─ ─ ─ ─ ─ ─ ─ ─ ─ ─ ┘
                        ▼
        ┌──────────────────────────────┐
        │ PERFORM SIMULATED CALCULATION│────── ST.04
        │ OF GAIN CURVE OF OPEN-LOOP   │
        │ TRANSFER FUNCTION            │
        └──────────────────────────────┘
                        │
                        ▼
        ┌──────────────────────┐
        │ CALCULATE MAGNITUDE   │────── ST.05        ST.10
        │ OF VIBRATION          │
        └──────────────────────┘
                        │
                        ▼
        ┌──────────────────────┐              ┌──────────────────┐
        │ CALCULATE VIBRATION   │────── ST.06  │ STORE UPDATED    │
        │ FREQUENCY             │              │ GAIN VALUE       │
        └──────────────────────┘              └──────────────────┘
                        │
                        ▼
        ┌──────────────────────────────┐
        │ STORE VIBRATION FREQUENCY    │────── ST.07
        │ AND MAGNITUDE OF VIBRATION   │
        └──────────────────────────────┘
                        │
                        ▼
        ┌──────────────────────┐                    ST.09
        │ DETECT OSCILLATION OF │────── ST.08
        │ FEEDBACK LOOP         │
        └──────────────────────┘
                        │
                        ▼
                   ╱─────────╲        NO   ┌──────────────────────┐
                  ╱ OSCILLATED?╲ ──────────│ UPDATE GAIN VALUE    │
                   ╲─────────╱             └──────────────────────┘
                        │ YES
                        ▼
        ┌──────────────────────┐
        │ STOP UPDATING GAIN    │────── ST.11
        └──────────────────────┘
                        │
                        ▼
                    ( End )
```

## FIG. 4

## FIG. 5

## FIG. 6

## FIG. 7

## FIG. 8

## FIG. 9

## FIG. 10

## FIG. 11

## FIG. 12

## FIG. 13

## FIG. 14

## FIG. 15

## FIG. 16

## FIG. 17

## FIG. 18

## FIG. 19

## FIG. 20

SIMPLY DETERMINE GAIN MARGIN — ST.B

CALCULATE OPEN-LOOP
TRANSFER FUNCTION — ST.C

# FIG. 21

```
                    Start

ST.01a ─────────────────────────────────────────┐
┌ ─ RETURN FREQUENCY ────────────────            │
│    TO INITIAL VALUE                ST.01d       │
│         │              ┌──────────────────┐    │
│         │    ┌─────────│  UPDATE FREQUENCY │◄───┤
│         ▼    ▼         └──────────────────┘    │
│    GENERATE SINE WAVE ──ST.01b    ST.01         │
│                         GENERATE SWEEP          │
└─────────────────────────SINE WAVE──────────     │
          │                                        │
          ▼                                        │
   ADD DISTURBANCE SIGNAL TO DRIVING               │
   FORCE GENERATED BY CONTROL UNIT ──ST.02         │
   AND DRIVE ELECTRIC MOTOR                        │
          │                          ST0.03        │
          ▼                                        │
┌ ─ ─ ─ ─ ─ ─ ─ ─ ─ ─ ─ ─ ─ ─ ─ ─ ─ ─ ─ ─ ─ ┐   │
   DETECT DRIVING FORCE GENERATED   DETECT SIGNAL │
   BY CONTROL UNIT BEFORE ADDITION  OF DETECTOR   │
   OF DISTURBANCE SIGNAL                           │
          ST.03a              ST.03b               │
└ ─ ─ ─ ─ ─ ─ ─ ─ ─ ─ ─ ─ ─ ─ ─ ─ ─ ─ ─ ─ ─ ┘   │
          ▼                                        │
   PERFORM SIMULATED CALCULATION OF GAIN ─ST.04    │
   CURVE OF OPEN-LOOP TRANSFER FUNCTION            │
          │                                        │
          ▼                         ST.10          │
   CALCULATE MAGNITUDE ──ST.05                     │
   OF VIBRATION                 STORE UPDATED ─────┘
          │                     GAIN VALUE
          ▼                         ▲
   CALCULATE VIBRATION ──ST.06      │
   FREQUENCY                        │
          │                         │
          ▼                         │
   STORE VIBRATION FREQUENCY ──ST.07 │
   AND MAGNITUDE OF VIBRATION       │
          │                         │
          ▼                         │
   DETECT OSCILLATION ──ST.08       │
   OF FEEDBACK LOOP                 │
          │                         │
          ▼              NO  ST.01c │
      Fmax = F ──────────────────────
          │ YES                     ST.09
          ▼                NO
      OSCILLATED? ──────────►  UPDATE GAIN VALUE
          │ YES
          ▼
   STOP UPDATING GAIN ──ST.11
          │
          ▼
         End
```

## FIG. 22

GAIN →

PHASE →

FREQUENCY →

## FIG. 23

Ref in

Fb in

# FIG. 24

| CALCULATE CHARACTERISTICS OF ELECTRIC MOTOR AND MACHINE | —— ST.A |

↓

| SIMPLY DETERMINE GAIN MARGIN | —— ST.B |

# FIG. 25

D → | H | → R

# FIG. 26

# FIG. 27

EP 2 178 202 A1

# FIG. 28

GAIN

SIMULATED
DISTURBANCE
TORQUE

TORQUE,
VELOCITY,
ETC.

VIBRATION
DETECTION
LEVEL

STORE LIMIT GAIN (GAIN SET BEFORE
OCCURRENCE OF VIBRATION)

TIME

# FIG. 29

```
                    ( EXTRACTION OF LIMIT GAIN )
                                 │
        ┌───────────────────────┴────────────────────────┐
        │ DETECT VIBRATION LEVEL OF MACHINE IN NORMAL OPERATION │─S1
        └───────────────────────┬────────────────────────┘
    S4                          │                    S2
 ┌──────────────┐   ┌───────────┴──────────────┐          ┐
 │ INCREASE SIMULATED│   │ ADD SIMULATED DISTURBANCE TORQUE │          │ ADJUSTING SIMULATED
 │ DISTURBANCE TORQUE│   └───────────┬──────────────┘          │ DISTURBANCE TORQUE
 └──────────────┘       NO ┌─────────┴─────────┐  S3           │ AND VIBRATION LEVEL
        └─────────────────────┤ EXCEEDS VIBRATION LEVEL? │          ┘
                              └─────────┬─────────┘
                                   YES  │
                          ┌─────────────┴──────────┐  S5          ┐
                          │  INCREASE CONTROL GAIN  │              │
                          └─────────────┬──────────┘  S6    YES    │
                              ┌─────────┴─────────┐                │ EXTRACTING
                              │   SET MAXIMUM GAIN?  ├──────────    │ LIMIT GAIN
                              └─────────┬─────────┘                │
                                    NO  │                          │
                          ┌─────────────┴──────────┐  S7           │
                          │ ADD SIMULATED DISTURBANCE TORQUE │      │
                          └─────────────┬──────────┘               │
                     NO ┌───────────────┴───────────┐  S8          │
        ┌───────────────┤   EXCEEDS VIBRATION LEVEL?   │            │
        │               └───────────────┬───────────┘              │
        │                          YES   │         S9               │
        │               ┌───────────────┴────────────────┐         │
        │               │ EXTRACT LIMIT GAIN AND REDUCE CONTROL GAIN │     ┘
        │               └───────────────┬────────────────┘
        │                               │                    S10
        │               ┌───────────────┴────────────────┐
        │               │ INCREASE SIMULATED DISTURBANCE TORQUE │─S10
        │               └───────────────┬────────────────┘
        │                   ┌───────────┴──────────┐  S11          ┐
        │                   │  INCREASE CONTROL GAIN │              │
        │                   └───────────┬──────────┘  S12    YES    │ OBTAINING MARGIN
        │                       ┌───────┴────────┐                  │ OF SET MAXIMUM
        │                       │  MAXIMUM GAIN?  ├──────────       │ GAIN
        │                       └───────┬────────┘                  │
        │                          NO   │         S13               │
        │                   ┌───────────┴──────────┐                │
        │                   │ ADD SIMULATED DISTURBANCE TORQUE │     │
        │                   └───────────┬──────────┘                │
        │              NO ┌─────────────┴─────────┐  S14            │
        └─────────────────┤ EXCEEDS VIBRATION LEVEL? │              │
                          └─────────────┬─────────┘                 │
                                   YES   │         S15              │
                          ┌─────────────┴──────────┐                │
                          │    UPDATE LIMIT GAIN    │                │
                          └─────────────┬──────────┘                ┘
                                        │
                          ┌─────────────┴──────────┐  S16
                          │    REDUCE CONTROL GAIN  │
                          └─────────────┬──────────┘
                                   YES   │
                                 (   END   )
```

# FIG. 30

x: AMOUNT OF OPERATION OF MACHINE

C: COMMAND SIGNAL

m: AMOUNT OF OPERATION OF ELECTRIC MOTOR

| 201 COMMAND GENERATOR | → | 202 CONTROLLER | → | 203 ELECTRIC MOTOR | → | 204 MACHINE |

205 DETECTOR

S: RESPONSE SIGNAL

f: DETECTED RESULT OF RESONANCE FREQUENCY

A: FREQUENCY INFORMATION OF SWEEP SINE WAVE COMMAND

206 SIGNAL PROCESSOR

FIG. 31

0                   N

TIME →

FREQUENCY →

Fmin                  Fmax

# FIG. 32

(a)
STABLE
STATE

(b)
STABILITY
LIMIT

(c)
UNSTABLE
STATE

EP 2 178 202 A1

## INTERNATIONAL SEARCH REPORT

| International application No. |
| --- |
| PCT/JP2008/062467 |

**A. CLASSIFICATION OF SUBJECT MATTER**
*H02P29/00* (2006.01) i

According to International Patent Classification (IPC) or to both national classification and IPC

**B. FIELDS SEARCHED**

Minimum documentation searched (classification system followed by classification symbols)
H02P29/00

Documentation searched other than minimum documentation to the extent that such documents are included in the fields searched
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)
WPI

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2003-134868 A (Yaskawa Electric Corp.), 09 May, 2003 (09.05.03), Par. Nos. [0003], [0007] to [0008] & US 2004/0239279 A1  & EP 1418663 A1 & WO 2003/017459 A1  & TW 571507 B | 1-19 |
| Y | JP 2005-45937 A (Yaskawa Electric Corp.), 17 February, 2005 (17.02.05), Par. Nos. [0008] to [0013] (Family: none) | 1-19 |
| Y | JP 10-176948 A (Meidensha Corp.), 30 June, 1998 (30.06.98), Par. Nos. [0009] to [0013] (Family: none) | 1-19 |

| ☒ Further documents are listed in the continuation of Box C. | ☐ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 22 August, 2008 (22.08.08) | 02 September, 2008 (02.09.08) |

| Name and mailing address of the ISA/ Japanese Patent Office | Authorized officer |
| --- | --- |
| Facsimile No. | Telephone No. |

Form PCT/ISA/210 (second sheet) (April 2007)

**INTERNATIONAL SEARCH REPORT**

International application No.

PCT/JP2008/062467

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2000-278990 A  (Matsushita Electric Industrial Co., Ltd.), 06 October, 2000 (06.10.00), Par. Nos. [0013], [0027] to [0036] & US 6211640 B1          & EP 1039624 A2 & DE 69930204 T          & CN 1267953 A | 2-4,10,11, 13,18,19 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005045937 A

- JP 2003134868 A

**Non-patent literature cited in the description**

- Zukai to jissen de manabu digitaru sabo no riron to jissen. **Honda ; Shirotani.** Zukai to jissen de manabu digitaru sabo no riron to jissen. The Nikkan Kogyo Shinbun, Ltd, 30 June 1998, 42-46